# EUROPEAN PATENT SPECIFICATION

(11) **EP 2 114 727 B1**
(45) Date of publication and mention of the grant of the patent: **07.03.2012**
(21) Application number: 08727367.8
(22) Date of filing: 04.01.2008
(51) Int. Cl.: B60R 13/00

(54) **Control assembly for a portion of an automobile interior, method of making an overhead console and automobile interior**
Bedienanordnung für einen Abschnitt eines Kraftfahrzeuginnnenraums, Verfahren zur Herstellung einer Überkopfkonsole und Kraftfahrzeuginnenraum
Ensemble de commande pour une portion de l'habitacle de véhicule automobile, procédé de fabrication d'un console de toit et habitacle de véhicule automobile

(30) Priority: 05.01.2007 US 883701 P
(43) Date of publication of application: 11.11.2009
(73) Proprietor: Johnson Controls Technology Company, Holland, MI 49423 (US); Busch, David B., Fishers, IN 46037-8876 (US)
(72) Inventor: BUSCH, David, B., Fishers, IN 46037-8876 (US); PIERCE, Kristan, M., West Olive, MI 49460 (US); KADZBAN, Mark, P., Grandville, MI 49418-2171 (US); HAMELINK, Robert, Hamilton, MI 49419 (US); SHOWALTER, John, L., Rochester Hills, MI 48307 (US)
(74) Representative: Wolff, Felix
(86) International application number: PCT/US2008/050287
(87) International publication number: WO 2008/086215

(56) References cited:
- EP-A2- 0 322 515
- EP-A2- 1 545 002
- WO-A2-2004/069578
- DE-A1-102005 003 548
- US-A- 5 803 240
- US-A1- 2003 205 450
- US-A1- 2004 202 001
- US-A1- 2005 007 349
- US-A1- 2005 206 623
- US-A1- 2006 035 073
- US-A1- 2006 132 383

## Description

### FIELD

The present invention relates generally to a film, and a plastic substrate molded behind the film, with relief areas in the plastic substrate to allow integration of various features, into the film, such as lenses, bezels, buttons usable to actuate switches for various functions in the interior of an automobile, including lamp power, Homelink® and other electrical functions, and the like.

### BACKGROUND

Automobile interiors, including overhead consoles, typically comprise a variety of protective covers. These protective covers typically makeup a portion of, or the entirety of, the exposed surface that is visible to a user of the automobile. As such, the protective covers are vulnerable to dirt and debris present in the automobile interior.

Typically, apertures are formed in these protective covers, with one or more buttons, lenses and the like fitted to and extending through the aperture such that they are accessible to a user. The buttons may be used to activate switches. The buttons may be formed by a variety of manufacturing processes, including stamping and/or injection molding. The apertures used for the buttons, lenses and the like may allow dirt and debris to collect beneath the protective cover of the automobile interior and/or between the protective cover and the buttons, lenses and the like. Furthermore, by incorporating buttons, lenses and the like that are separate from the protective cover, the existing designs require numerous parts and steps for assembly. Document EP 1 545 002 A2 discloses a control assembly for a portion of an automobile interior comprising a film layer, having at least one functional region, a substrate provided behind at least a portion of the film layer, at least one controllable element provided behind the film layer and engagable by an occupant of the vehicle by interacting with a corresponding one of the at least one functional regions of the film layer.

### SUMMARY

By limiting or eliminating the apertures that are conventionally formed in the protective cover, dirt and debris can be kept on the outside surface of the automobile interior, where the dirt and debris is more easily cleaned and/or removed. Additionally, by reducing the number of parts in an automobile interior as well as the steps necessary for assembling those parts, the production cost of the vehicle interior, and thus the vehicle as a whole, can be reduced. The reduced number of parts may also reduce the possibility of component failure and/or manufacturing defects associated with the additional parts. Additionally, this allows the functionality and customizable features of automobile interiors to be improved. This is achieved by the the features of claim 1. A method of making an overhead console assembly is provided in claim 6.

The number of parts in an automobile interior, and the steps necessary to assemble those parts, can be reduced by providing an automobile interior with features, such as lenses, bezels and buttons, that are provided as functional regions of the protective cover of the automobile interior. This reduction in the parts of, and in the steps necessary to assemble the parts into, an automobile interior results in reduced capital and its associated costs as well as costs involved in assembly. Additionally, by providing functional features, such as lenses, bezels and buttons, as portions of the protective cover of the automobile interior, a reduction of the number of apertures necessary in the protective cover can also be achieved. This reduced number of apertures in the protective cover results in a better sealed automotive interior, which is easier to clean.

This invention relates to an automobile interior, or a portion of an automobile interior, that includes a protective outer layer according to claim 12. The protective outer layer includes a film layer with a plastic substrate provided behind the film layer. The film layer includes at least one functional region. In some embodiment, an aperture in the plastic substrate is substantially aligned with each functional region.

The functional region is a region of the film layer that allows interaction or manipulation with a mechanical, electrical or other type of control device beneath the film layer that frames, surrounds or covers a design and/or functional aspect of the protective outer layer, and/or that transmits light or the like through the protective outer layer. For example, the functional region may allow interaction with a plunger of a push button switch located beneath the film layer and substantially aligned with the aperture in the plastic substrate and the functional region of the film layer. Likewise, the functional region may allow interaction with a capacitance switch located beneath the film layer and substantially aligned with the aperture in the plastic substrate and the functional region. The functional region may be a bezel or a lens that surrounds, frames or covers a feature of the protective cover, such as a toggle or other switch, a dome, map, reading or other interior light or the like.

It should be appreciated that the functional region is a part of the film layer and is formed into the film layer or provided in the film layer during manufacture of the film layer. In some embodiments, additional parts or material may be inserted into a mold of the film layer to produce the functional region. However, after the film layer is molded, any additional parts or materials necessary for the production of the functional region become part of the film layer.

These and other features and advantages of various exemplary embodiments of structures and methods according to this invention are described in, or are apparent from, the following detailed descriptions of various exemplary embodiments of various devices, structures and/or methods according to this invention.

### DRAWINGS

Various exemplary embodiments of the systems and methods according to this invention will be described in detail, with reference to the following figures, wherein:

Fig. 1 is a representation of an overhead console assembly comprising one embodiment of an exemplary film layer according to this invention;

Fig. 2 is a sectional view of a portion of an exemplary film layer according to this invention;

Fig. 3 is a plan view of a portion of an exemplary film design;

Fig. 4 is sectional representation of a portion of an exemplary film layer according to this invention;

Fig. 5 is a plan view of a portion of an exemplary film layer according to this invention;

Fig. 6 is a sectional view of a portion of a second exemplary film layer not forming part of the invention;

Fig. 7 contains sectional views of a portion of a third and fourth exemplary film layers not forming part of the invention;

Fig. 8 is a perspective view of a portion of an exemplary film layer not forming part of the invention;

Fig. 9 is a sectional view of a portion of an exemplary film layer not forming part of the invention;

Fig. 10 is an exploded view of a conventional overhead console;

Fig. 11 is an exploded view of an exemplary overhead console comprising an exemplary film layer not forming part of the invention;

Fig. 12 is an exploded view of an exemplary overhead console comprising an exemplary film layer not forming part of the invention;

Fig. 13 is an exploded view of an exemplary overhead console comprising an exemplary film layer not forming part of the invention;

Fig. 14 is an exploded view of a second conventional overhead console;

Fig. 15 contains perspective views of exemplary overhead console assemblies comprising an exemplary film layer according to this invention;

Fig. 16 contains perspective views of exemplary overhead console assemblies comprising an exemplary film layer according to this invention;

Fig. 17 is an exploded view of an exemplary lighting assembly comprising an exemplary film layer not forming part of the invention;

Fig. 18 is a perspective view of an exemplary lighting assembly comprising an exemplary film layer not forming part of the invention;

Fig. 19 is a perspective view of an exemplary portion of a roof assembly comprising an exemplary film layer not forming part of the invention;

Fig. 20 is a perspective view of exemplary overhead console assemblies comprising exemplary film layers not forming part of the invention and various exemplary graphics that may be utilized in connection with various exemplary film layers not forming part of the invention;

Fig. 21 contains views of portions of exemplary console assemblies comprising exemplary film layers not forming part of the invention and various exemplary graphics that may be utilized in connection with various exemplary film layers not forming part of the invention ; and

Fig. 22 contains representations of various exemplary graphics and an exemplary graphical layout for an exemplary overhead console comprising an exemplary film layer not forming part of the invention.

### DETAILED DESCRIPTION OF EXEMPLARY EMBODIMENTS

It should be understood that the drawings are not necessarily to scale. In certain instances, details that are not necessary for the understanding of the invention or render other details difficult to perceive may have been omitted. It should be understood, of course, that the invention is not necessarily limited to the particular embodiments illustrated herein.

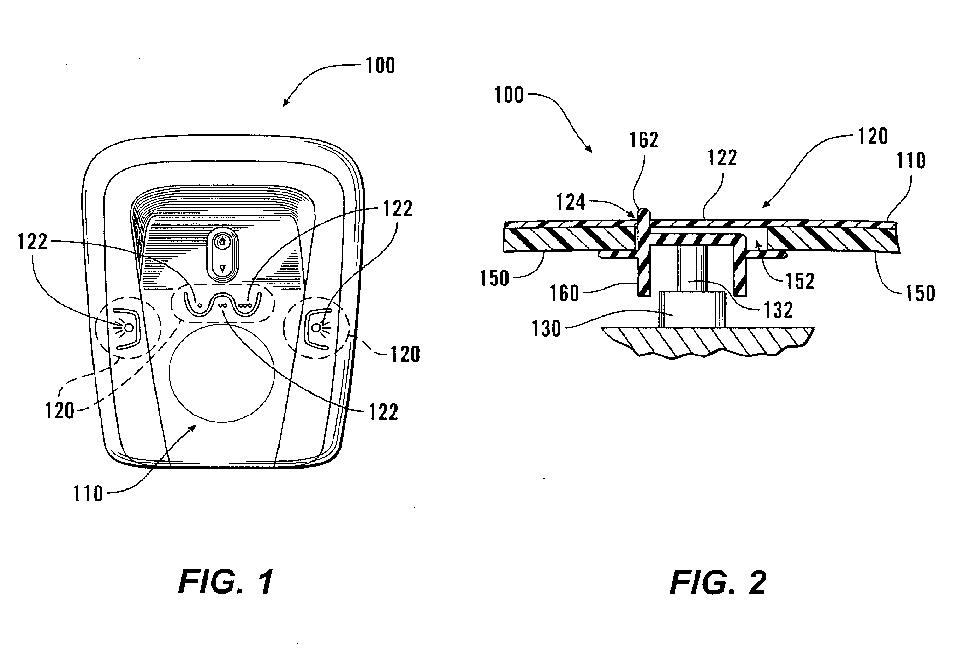

Fig. 1 illustrates one exemplary embodiment of an overhead console cover 100 usable in an overhead console assembly. As shown in Fig. 1, the overhead console cover 100 includes a film 110. As shown in Fig. 2, the film 110 is provided over a supporting substrate 150. In the exemplary embodiments shown in Figs. 1 and 2, the film 110 includes at least one exemplary embodiment of a functional region 120. As shown in Fig. 1, the functional region(s) 120 can be a button, a button region or a button profile, or a series of buttons, button regions or button profiles. The buttons, button regions or button profiles implemented by the functional regions 120 may be used to actuate any desired function of the vehicle, such as lamp power, Homelink^{®}, and/or other mechanical and/or electrical functions. The film 110 may be made of any material that has the desired characteristics, such as rigidity, moldability and/or flexibility, and through which the desired functions can be performed or actuated.

Fig. 2 shows a sectional view of a portion of the overhead console cover 100, including the film 110 and one exemplary embodiment of a functional region 120. As shown in Fig. 2, in various exemplary embodiments, the functional region 120 includes a button region 122 of the film 110 and a rib or extension 162 of a tracer 160. In various exemplary embodiments, the tracer 160 may be integrated, incorporated and/or inserted into or through the film 110. In various exemplary embodiments, the tracer 160 can be formed of rubber, silicone or other synthetic and/or rubber-like materials or the like. For example, the tracer 160 can be formed of Santoprene^{®}. In various exemplary embodiments, the plastic or molded material forming the supporting substrate 150 has one or more apertures, recesses or the like 152 provided in it. In various exemplary embodiments, each functional region 120, and any corresponding tracers 160, are substantially aligned with the apertures, recesses or the like 152.

As further shown in Fig. 2, one or more switches, latches or the like 130 are provided behind or in the supporting substrate 150 and aligned with the apertures, recesses or the like 152 and the tracers 160. In various exemplary embodiments, the tracers 160 may be incorporated or inserted into a mold of a film die. In various exemplary embodiments, at least one tracer 160 is flexibly coupled to the film 110. It should be appreciated that, although the button region 122 is shown in Fig. 2 as usable to depress a plunger 132 of the switch 130, the switch 130 can be replaced with any suitable electrical controller, such as a capacitive switch, proximity switch or the like.

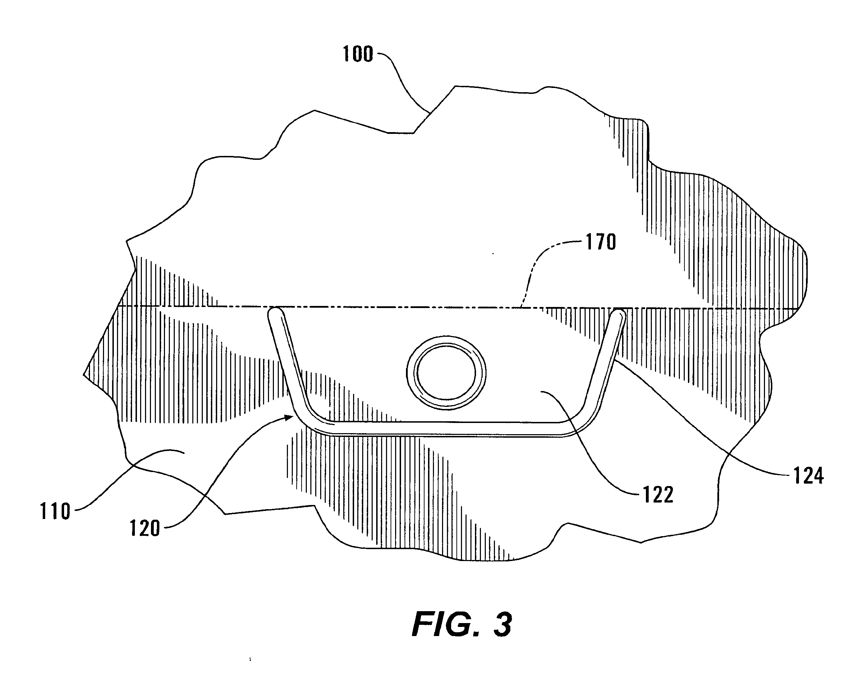

As shown in Figs. 2-5, in various exemplary embodiments, the film 110 comprises at least one functional region 120 that is separated from other functional regions 120 and/or other areas of the film 110 by at least one slot 124, which allows additional functional properties or geometries, such as flex. For example, as shown in Fig. 3, a functional region 120 has a button region 122 that is coupled to the rest of the film 110 along or about a hinge line 170 and that is separated from the film 110 on all other sides by a slot 124. It should be appreciated that the flexibility of the button region 122 of the functional region 120 along or about the hinge line 170 can be improved by reducing the thickness of at least a portion of the supporting substrate 150 and/or a portion of the button region 122 and/or the film 110 near the hinge line 170. As shown in Fig. 3, in various exemplary embodiments, first and second ends of the slot 124 help create the pivot point or hinge line 170, such that the surface of the functional region 120 behaves like a cantilever, with a ridged or fixed end anchored on or about the hinge line 170 of the film 110.

The slot 124 may be formed by any material removal or fabrication process including stamping, etching, cutting, molding or casting. The slot 124 may be of any suitable size and configuration. In one embodiment, the slot 124 may be substantially 3 mm wide. The button region 122 of the functional region 120 may also be of any suitable size and configuration. In one embodiment, the button region 122 may be approximately 25 mm wide.

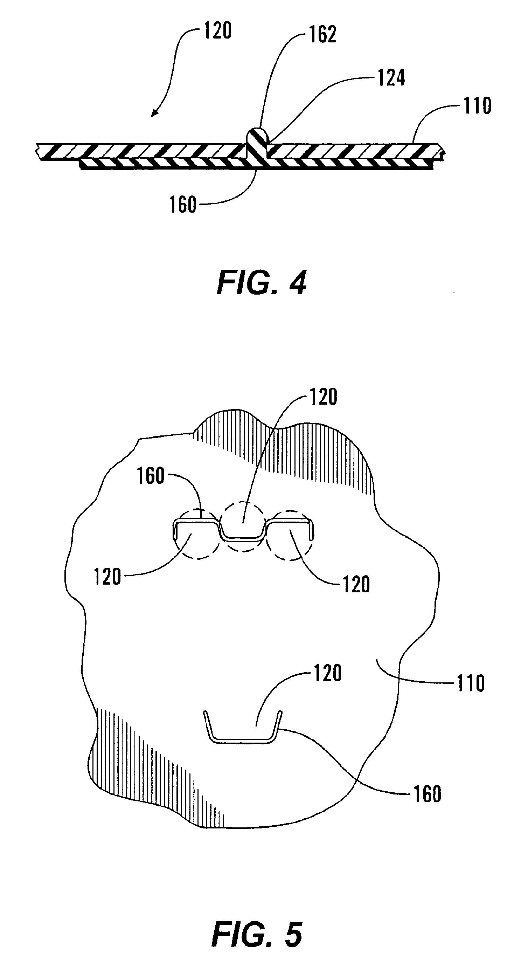

The tracer 160 may be inserted in the slot 124 such that the rib 162 extends through the slot 124. In various exemplary embodiments of the present invention, the tracer 160 is inserted into a mold cavity of the film 110. As shown in Fig. 4, in one embodiment, the tracer 160 that outlines a portion of the margin of the button region 122 of the functional region 120 is inserted into the mold cavity of the film 110 and the rib or protrusion 162 is formed and raised at an angle.

Among other things, the tracer 160 may be utilized to provide a tactile surface. As shown in Fig. 4, the tracer 160 may be raised from the surface of the film 110. For example, the tracer 160 may be substantially .8 mm above the surface of the film 110. The raised nature of the rib 162 of the tracer 160 in relation to the surface of the film 110 allows for tactile feedback to a user and helps define the edges of the button region 122 of the functional region 120. In another embodiment, however, at least a portion of the tracer 160 may be set below the surface of the film 110, leaving a recess. Again, the change in elevation between the tracer 160 and the surface of the film 110 provides tactile feedback to the user and helps define the edges of the button region 122 of the functional region 120.

It should be appreciated that, by providing tactile feedback to define the edges of the button region 122 of the functional region 120, the tracer 160 improves the usability of the functional region 120 and allows a user to operate the functional region 120 in low-light or no-light conditions, as well as when the user is not looking directly at the functional region 120. The tracer 160 may be formed using any suitable material. In various exemplary embodiments, the tracer 160 is formed using a rubber or rubber-type material. In various exemplary embodiments, the tracer 160 is formed using a soft feel material. As shown in Fig. 5, a single slot 124 and/or a single tracer 160 extending through the slot 124 may be used to define a single functional region 120 or multiple functional regions 120.

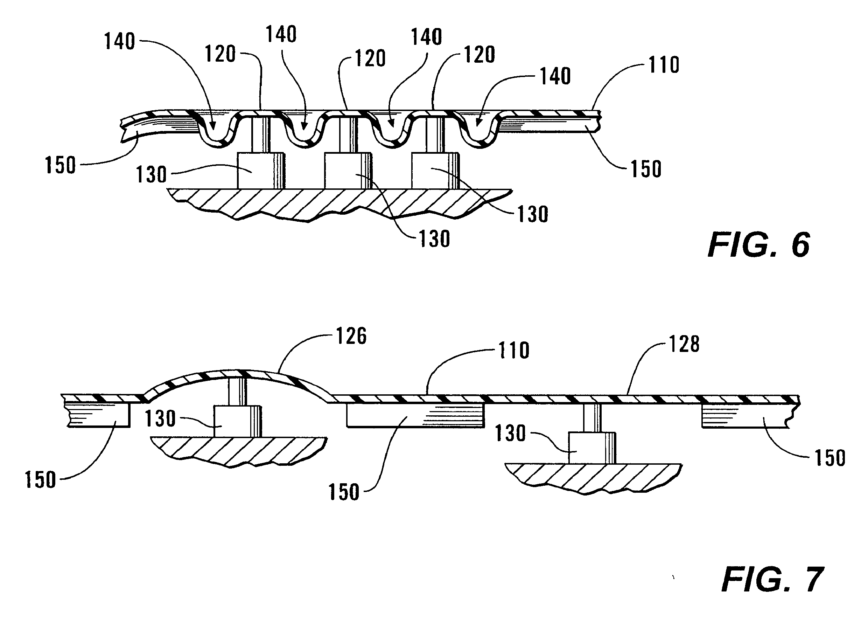

Another structure that improves the tactile feedback and edge definition of the functional region(s) 120 is shown in Figs. 6-9. As shown in Figs. 6-9, the film 110, and at least one functional region 120, need not be substantially planar. As shown in Fig. 6, in various exemplary embodiments, at least one draw or deep recess 140 may be provided in the film 110 to help define at least one functional region 120. In various exemplary embodiments, a plurality of functional regions 120 may be separated by a number of the draws or deep recesses 140 to help define, at least in part, the shapes of the functional regions 120. It should be appreciated that a tracer 160, a plastic cap or the like may be provided between the functional region 120 and the switches 130. In the exemplary embodiment shown in Fig. 6, the tracer 160, the plastic cap or the like is omitted.

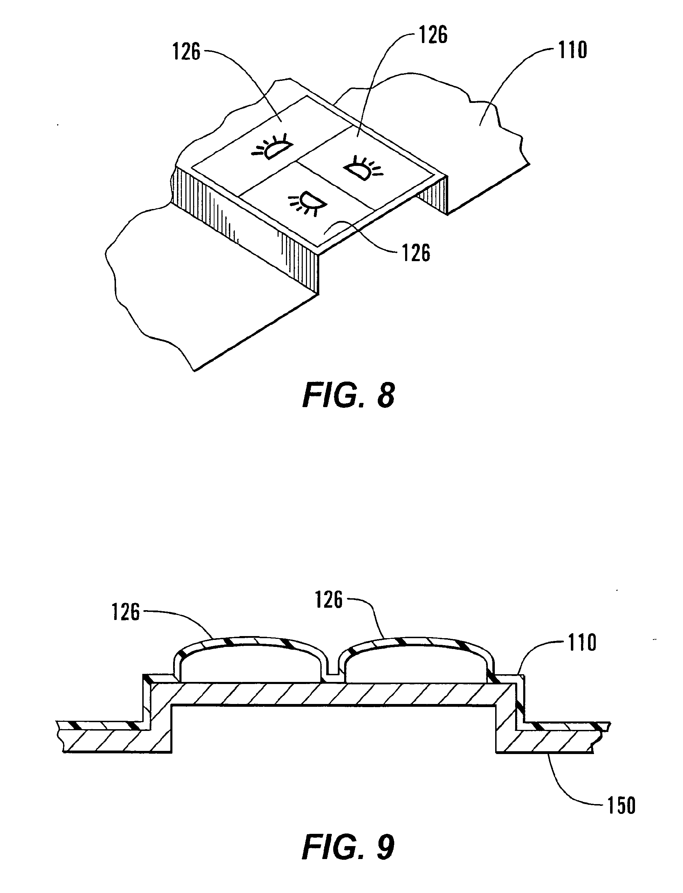

As shown in Fig. 7, in various exemplary embodiments, the functional region 120 may include a popple 126 formed in the film 110. The popple 126 may be of any suitable size and shape. As shown in Fig. 8, in one embodiment, the popples 126 are square or rectangular in shape with a size of 20 to 25 mm square and may be raised .25 to .5 mm from the otherwise planar surface of the film 110. As shown in Fig. 9, in one embodiment of the present invention, the film 110 may comprise a plurality of popples 126. The popples 126 may be spaced relatively close together. For example, the popples 126 in one embodiment of the present invention may be spaced apart by 1 mm or less.

Referring back to Fig. 7, the use of popples 126 is not limited to changing elevations and defining button regions 122. As such, the film 110 need not include the raised popples 126 shown in Figs. 7-9. Rather, the film 110 may include one or more popples 128 that are substantially flat, smooth and/or flush with the surface of the film 110 when in their rest state, i.e., when they are not being depressed by a user In such exemplary embodiments, other structures usable to define the edges of the functional region 120 and/or to provide tactile feedback may be used.

Other variations of the various exemplary embodiments of the present invention outlined herein may also be used For example, the film 110 may utilize capacitance switching, proximity sensors or the like.

Referring to Figs 1-9, m various exemplary embodiments, the film 110 including the at least one functional region 120 is formed from a single sheet of material The material may be any substance having suitable rigidity and flexibility characteristics In various exemplary embodiments, the film 110 is a resilient material such as silicone The film 110 may also be formed using some other elastomer material In various exemplary embodiments, at least a portion of the material forming the film 110 will be transparent or translucent, to permit emanation or backlighting In such exemplary embodiments, the portion of the film 110 which is transparent or translucent may be a thinned portion of the same material forming the rest of the film 110 In various exemplary embodiments, the material forming the film 110 may be substantially opaque The film 110 including the at least one functional region 120, may also be of any suitable thickness. For example, the thickness of the film 110 may range from 0,127 - 0,762 mm (005 - 030 inches). In various exemplary embodiments, the film 110 may be substantially 0,254 mm (.010 inches) in thickness.

The plastic or molded material used to form the supporting substrate 150 may also be any suitable material In various exemplary embodiments, the plastic or molded material can include a polycarbonate material The supporting substrate 150 may also be of any suitable size, shape or configuration.

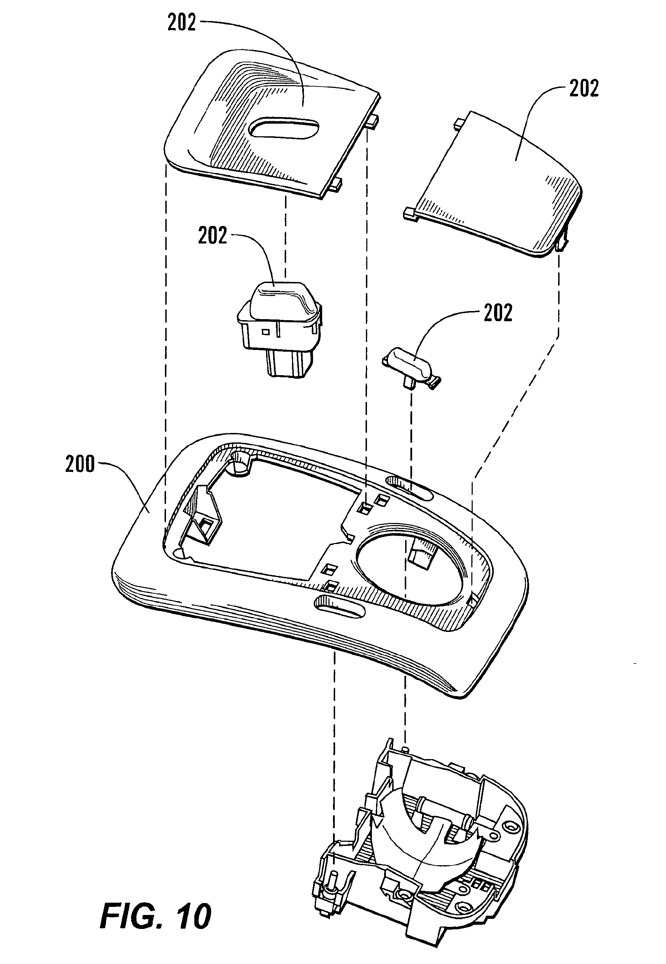

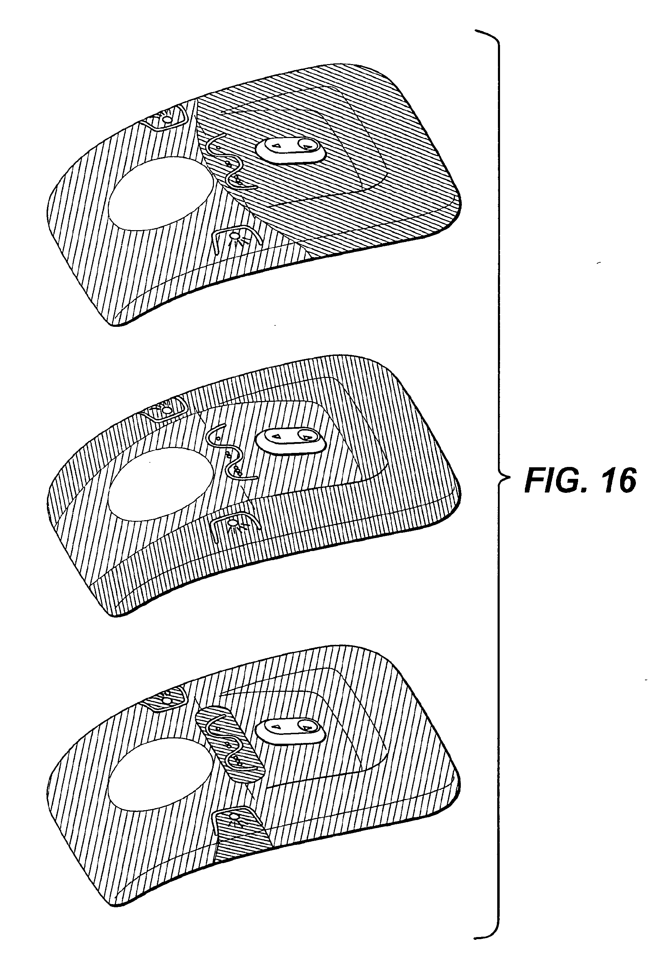

As shown in Figs 10-18, by forming or providing one or more functional regions, such as button regions, lenses and/or bezels into the film, a reduction m cost and complexity of the assembly is achieved. For example, as depicted m Figs 10-14, various embodiments of the present invention offer a number of advantages, including less tooling, less capital, and fewer part numbers For example, Fig 10 illustrates an exploded view of a traditional overhead console unit Automobile consoles, including overhead consoles, typically include a protective cover 200 with apertures through or into which at least one button, bezel and/or lens 202 may be fit and be accessible to the user The buttons may be formed by a variety of manufacturing processes, including stamping and/or injection molding By incorporating independent buttons, lenses, and/or bezels 212 that are separate from the protective cover 200, prior art designs require numerous parts and numerous assembly steps to combine the buttons, lenses and/or bezels 202 with the protective cover 200.

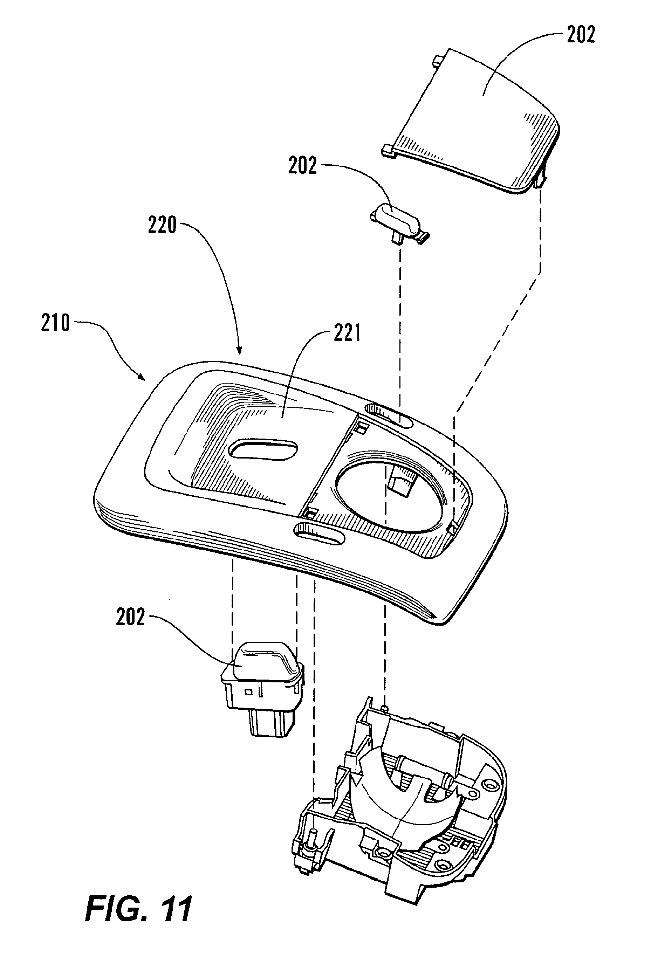

Referring now to Figs. 11-13, a first exemplary film 210 allows various functional regions or features 220, such as lenses, bezels and buttons, to be provided as portions of the film 210. Specifically, Fig. 11 illustrates an exemplary film 210 having at least one functional region 220, comprising at least one bezel or bezel appearance 221, as part of the film 210.

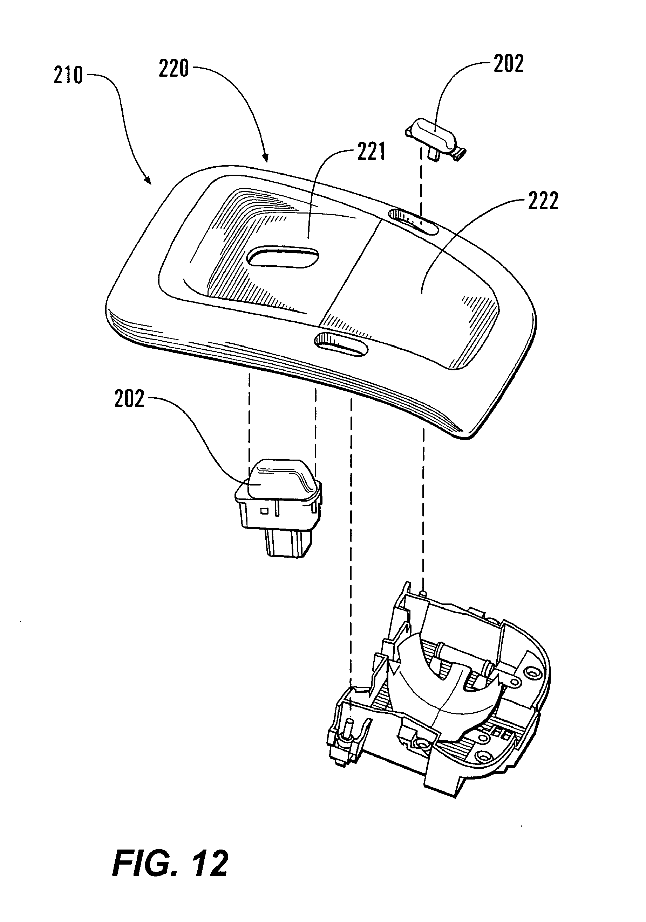

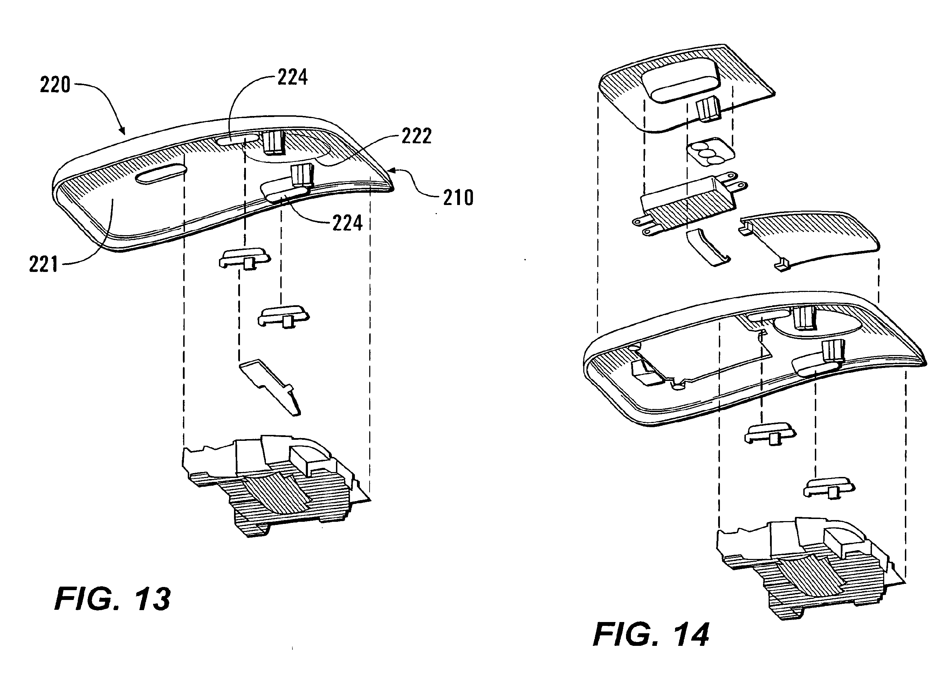

Referring to Fig. 12, a second exemplary film 210 also has at least one functional region 220, comprising at least one lens or lens appearance 222, as part of the film 210. Referring to Fig. 13, a third exemplary film 210 has at least one functional region 220, comprising at least one bezel or bezel appearance 221, at least one lens or lens appearance 222, and at least one button 224, as part of the film 210. In comparison, the traditional overhead console units shown in Figs. 10 and 14 require a greater number of parts and incur associated costs to create and assemble the additional parts.

The provision of buttons and/or button regions 224, bezels and/or bezel appearances 221 and/or lenses and/or lens appearances 222 as part of the film 210, rather than as elements separate from the film 210, also generally reduces, if not prevents, liquids, debris and other unwanted matter from entering spaces between the switches and simplifies the cleaning of consoles and other assemblies incorporating such switches.

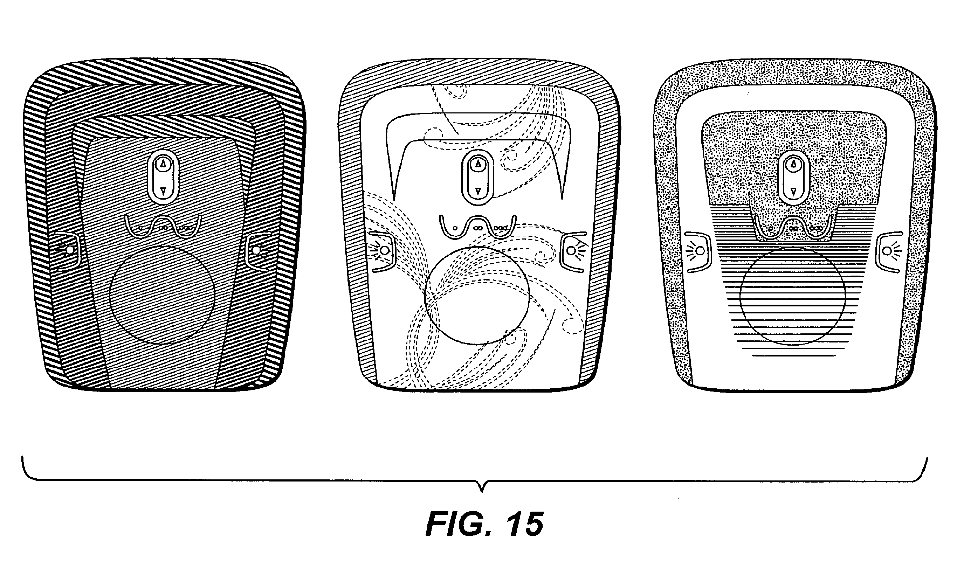

In addition, as shown in Figs. 15-16, the use of the films 110 and/or 210 allows the use of a multitude of finishes and graphics on various consoles and automobile components. In various exemplary embodiments, a die is preheated with a desired surface finish such as a metallic finish, an animal grain finish, and any other suitable finish or finishes. In various exemplary embodiments, at least one desired surface finish may be printed onto and/or into the film 110 or 210. High gloss, low gloss, leather, chrome, textures, patterns, and any number of other finishes and graphics may be used in connection with the various embodiments of the film 110 or 210 according to the present invention. In some exemplary embodiments, some or all of the functional regions 120, such as the buttons and/or button regions 224, bezels and/or bezel appearances 220 and/or lenses and/or lens appearances 222, have graphics thereon or therein for indicating the specific functionality, and/or providing other information associated with the functional regions 120. In some such embodiments, the graphics on or in the functional regions 120, such as the buttons and/or button regions 224, the bezels and/or bezel appearances 220 and/or the lenses and/or lens appearances 222 are backlit.

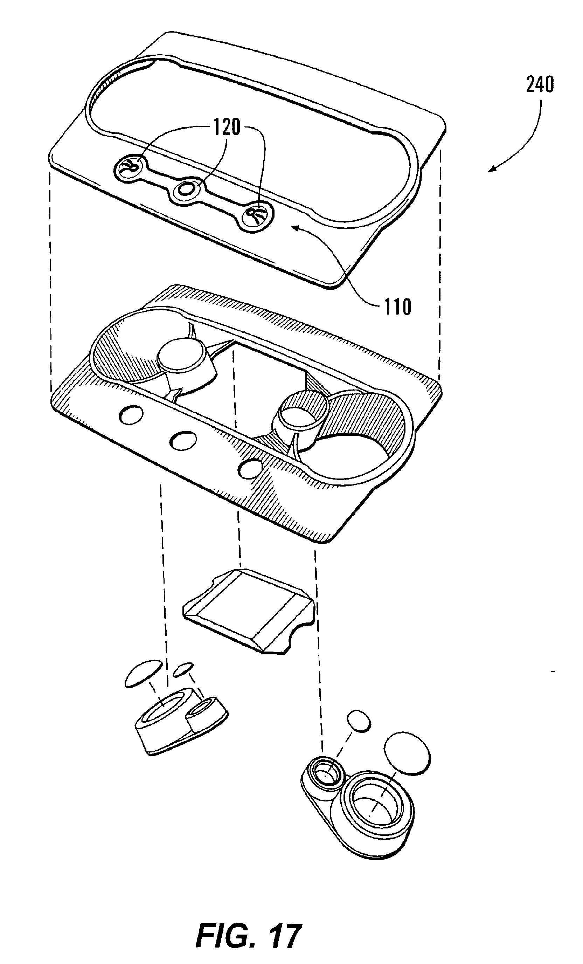

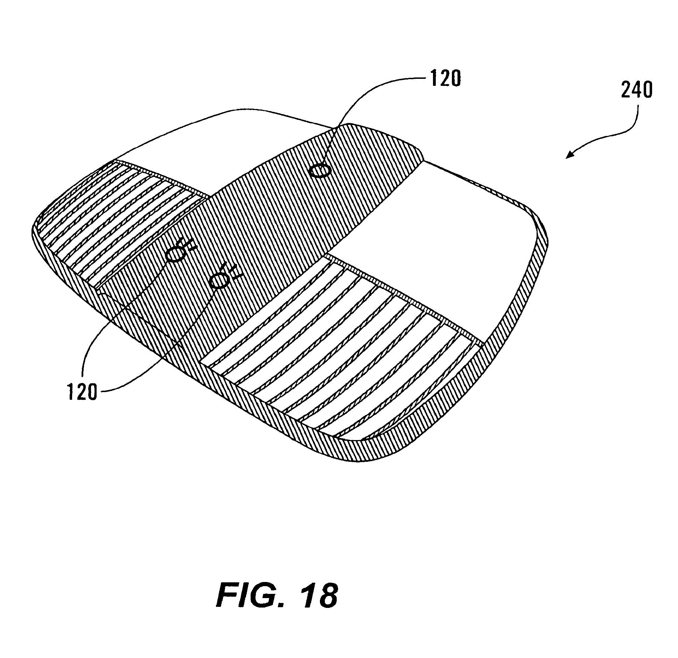

Figs. 17-22 illustrate various ways an exemplary film 110 may be incorporated into a variety of interior features and consoles, including an overhead interior lighting assembly 240, and a roof assembly 250 or a portion of a roof assembly 250. As shown in Fig. 17, an overhead lighting assembly 240 may incorporate a film 110 having a number of functional regions 120 usable to control and/or activate the lighting features of the overhead lighting assembly 240. For example, functional regions 120 designed according to any of the above-outlined embodiments and/or according to any separate embodiments, may be incorporated into a portion of the overhead lighting assembly 240 to control and/or activate at least one overhead light. As shown in Fig. 18, the overhead lighting assembly 240 may take any desired shape and may comprise any number of separate parts or layers, including being a single piece.

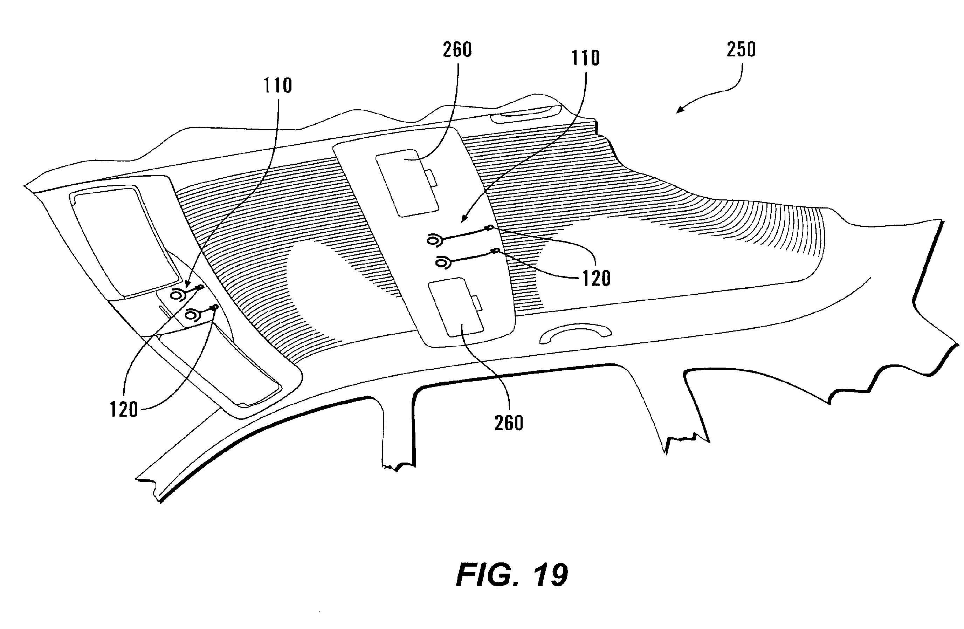

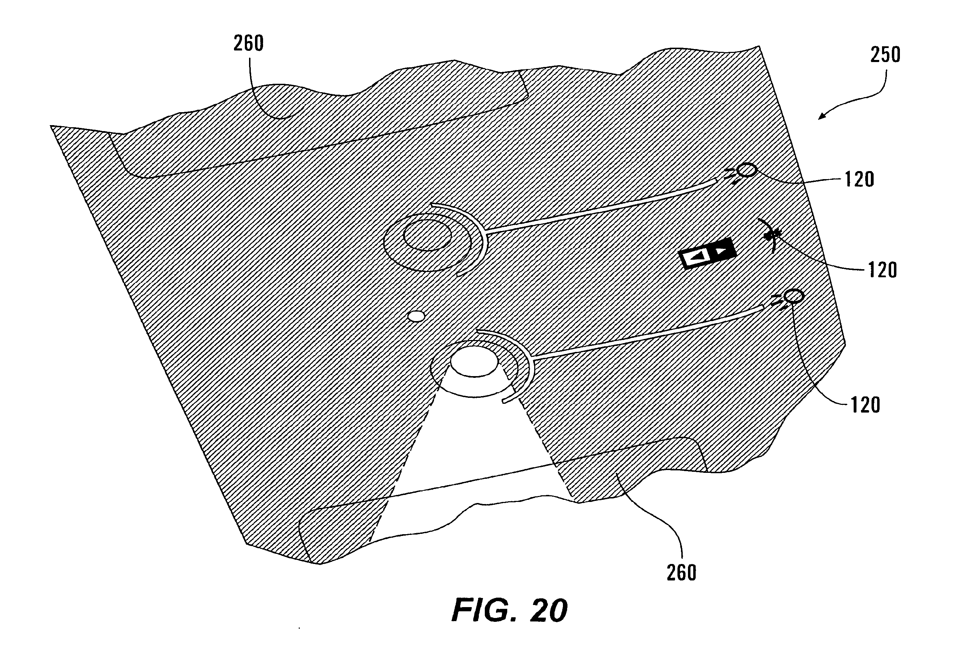

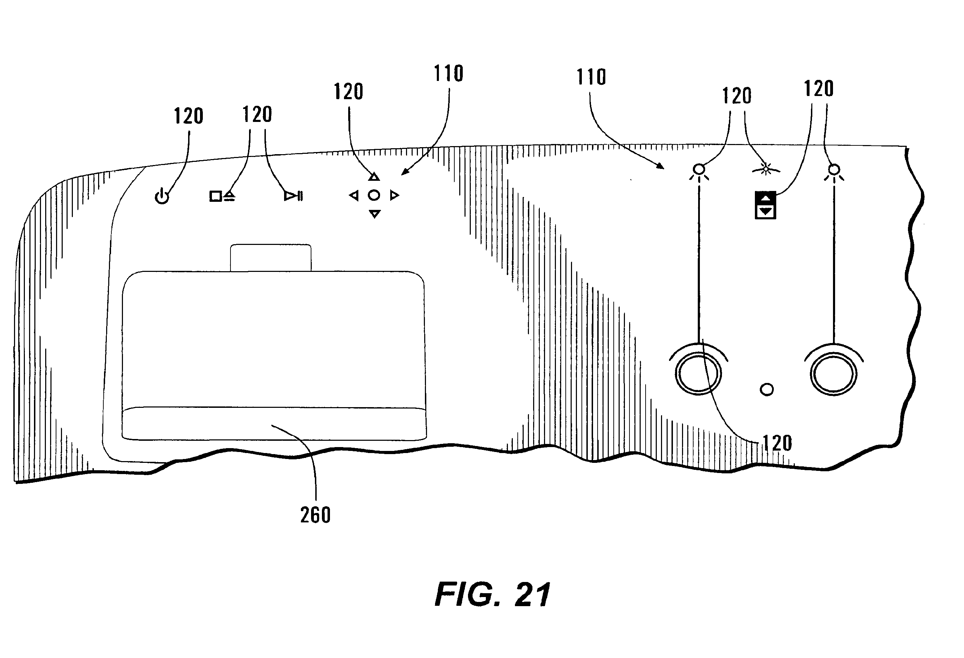

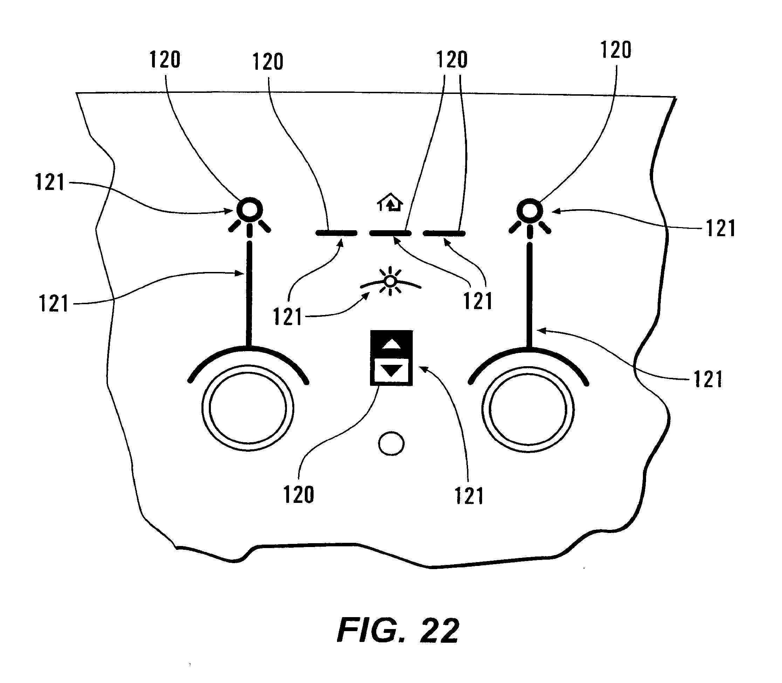

As shown in Fig. 19, exemplary embodiments of a film 110 having a number of the functional regions 120 may be incorporated into a roof assembly 250 or a portion of a roof assembly 250. The film 110 and functional regions 120 may be designed according to any of the above-outlined embodiments and/or any separate embodiments. By using the exemplary film 110, additional space may be made available in the roof assembly 250 for other features, such as vanity mirrors, control panels and/or display screens 260. As shown in Fig. 20, the roof assembly 250 may have backlit designs and/or indicia that identify the functional regions 120. As shown in Fig. 21, the functional regions 120 may control aspects of a display screen 260 and/or media displayed on the display screen 260. It should be appreciated that, as stated above, the functional regions 120 may be used to control any desired aspect of the automobile, including lighting controls, Homelink^{®} controls, media controls, power window controls and/or any other desired electrical control and/or mechanical feature of the automobile. As shown in Fig. 22, the functional regions 120 may be defined and/or identified by backlit and/or printed graphics or indicia 121.

All exemplary dimensions indicated herein in the specification and drawings are exemplary only and not intended to be limiting. Further, while this invention has been described in conjunction with the exemplary embodiments outlined above, various alternatives, modifications, variations, improvements and/or substantial equivalents, whether known or that are or may be presently foreseen, may become apparent to those having at least ordinary skill in the art. Accordingly, the exemplary embodiments of the invention, as set forth above, are intended to be illustrative, not limiting. Various changes may be made without departing from the scope of the invention.

## Claims

1. A control assembly (100) for a portion of an automobile interior comprising: a film layer (110) having at least one functional region (120); a substrate (150) provided behind at least a portion of the film layer (110); at least one controllable element (130) provided behind the film layer (110) and engageable by an occupant of the vehicle by interacting with a corresponding one of the at least one functional regions (120) of the film layer (110), wherein at least one edge of the functional region (120) is defined by a slot (124) provided in the film layer (110), **characterized in** the control assembly (100) further comprising a rib (162) provided in the slot (124) and projecting beyond an outer surface of the film layer (110).

2. The control assembly (100) of claim 1, further comprising: at least one aperture (152) provided in the substrate (150) and substantially aligned with a corresponding one of the at least one functional region (120) of the film layer (110).

3. The control assembly (100) of claim 1, wherein the portion of an automobile interior is an overhead console (100).

4. The control assembly (100) of claim 1, wherein at least one edge of at least one functional region (120) is defined by a depression in the film layer (110).

5. The control assembly (100) of claim 1, wherein at least one functional region (120) comprises a popple provided in the film layer (110).

6. A method of making an overhead console assembly (100) comprising: forming at least one functional region (120) in a film layer (110) of the overhead console; providing a support substrate (150) behind at least a portion of the film layer (110); providing at least one controllable element (130) behind the film layer (110) that is engageable by an occupant of the vehicle by interaction with a corresponding one of the at least one functional regions (120) of the film layer (110), wherein forming at least one functional region (120) comprises providing a channel in the film layer (110) along at least a first edge of at least one of the at least one functional region (120), **characterized in** providing a rib (162) in the slot (124) projecting beyond an outer surface of the film layer (110).

7. The method of claim 6, further comprising: providing at least one aperture (152) in the support substrate (150) that is substantially aligned with a corresponding one of the at least one functional region (120) of the film layer (110).

8. The method of claim 6, further comprising, for at least one functional region (120) provided with a slot (124), providing a hinge line along at least a second edge of that functional region (120).

9. The method of claim 6, wherein providing the hinge line comprises thinning material in at least one of the film layer (110) and the support substrate (150) corresponding to the hinge line.

10. The method of claim 6, wherein forming at least one functional region (120) comprises providing at least a first draw in the film layer (110) on at least a first edge of the at least one functional region (120).

11. The method of claim 6, wherein forming at least one functional region (120) comprises providing at least one popple in the film layer (110).

12. Automobile interior comprising a control assembly (140) according to one of the claims 1 to 5.

## Patentansprüche

1. Steuerungsanordnung (100) für einen Abschnitt eines Automobilinnenraums, welche Folgendes aufweist: eine Folienschicht (110) mit mindestens einem funktionalen Bereich (120); ein Substrat (150), das hinter mindestens einem Abschnitt der Folienschicht (110) vorgesehen ist; mindestens ein steuerbares Element (130), das hinter der Folienschicht (110) vorgesehen ist und von einem Insassen des Fahrzeugs durch Interagieren mit einem entsprechenden von dem mindestens einen funktionalen Bereich (120) der Folienschicht (110) einschaltbar ist, wobei mindestens ein Rand des funktionalen Bereiches (120) durch einen in der Folienschicht (110) vorgesehenen Schlitz (124) definiert ist, **dadurch gekennzeichnet, dass** die Steuerungsanordnung (100) ferner eine Rippe (162) aufweist, die in dem Schlitz (124) vorgesehen ist und über eine Außenfläche der Folienschicht (110) hinaus vorsteht.

2. Steuerungsanordnung (100) nach Anspruch 1, welche ferner Folgendes aufweist: mindestens eine Öffnung (152), die in dem Substrat (150) vorgesehen ist und im Wesentlichen auf einen entsprechenden von dem mindestens einen funktionalen Bereich (120) der Folienschicht (110) ausgerichtet ist.

3. Steuerungsanordnung (100) nach Anspruch 1, wobei der Abschnitt des Automobilinnenraums eine Dachkonsole (100) ist.

4. Steuerungsanordnung (100) nach Anspruch 1, wobei mindestens ein Rand mindestens eines funktionalen Bereiches (120) durch eine Vertiefung in der Folienschicht (110) definiert ist.

5. Steuerungsanordnung (100) nach Anspruch 1, wobei mindestens ein funktionaler Bereich (120) eine flexible Folientaste aufweist, die in der Folienschicht (110) vorgesehen ist.

6. Verfahren zum Herstellen einer Dachkonsolenanordnung (100), welches Folgendes aufweist: Ausbilden mindestens eines funktionalen Bereiches (120) in einer Folienschicht (110) der Dachkonsole; Vorsehen eines Trägersubstrats (150) hinter mindestens einem Abschnitt der Folienschicht (110); Vorsehen mindestens eines steuerbaren Elements (130) hinter der Folienschicht (110), welches von einem Insassen des Fahrzeugs durch Interaktion mit einem entsprechenden von dem mindestens einen funktionalen Bereich (120) der Folienschicht (110) einschaltbar ist, wobei das Ausbilden mindestens eines funktionalen Bereiches (120) das Vorsehen eines Kanals in der Folienschicht (110) entlang mindestens eines ersten Randes mindestens eines von dem mindestens einen funktionalen Bereich (120) beinhaltet, **gekennzeichnet durch** Vorsehen einer Rippe (162) in dem Schlitz (124), die über eine Außenfläche der Folienschicht (110) hinaus vorsteht.

7. Verfahren nach Anspruch 6, welches ferner Folgendes aufweist: Vorsehen mindestens einer Öffnung (152) in dem Trägersubstrat (150), welche im Wesentlichen auf einen entsprechenden von dem mindestens einen funktionalen Bereich (120) der Folienschicht (110) ausgerichtet ist.

8. Verfahren nach Anspruch 6, welches ferner, für mindestens einen funktionalen Bereich (120), der mit einem Schlitz (124) versehen ist, das Vorsehen einer Scharnierlinie entlang mindestens eines zweiten Randes dieses funktionalen Bereiches (120) aufweist.

9. Verfahren nach Anspruch 6, wobei das Vorsehen der Scharnierlinie das Dünnermachen des Materials in der Folienschicht (110) und/oder dem Trägersubstrat (150) entsprechend der Scharnierlinie beinhaltet.

10. Verfahren nach Anspruch 6, wobei das Ausbilden mindestens eines funktionalen Bereiches (120) das Vorsehen mindestens einer ersten tiefen Ausnehmung in der Folienschicht (110) an mindestens einem ersten Rand des mindestens einen funktionalen Bereiches (120) beinhaltet.

11. Verfahren nach Anspruch 6, wobei das Ausbilden mindestens eines funktionalen Bereiches (120) das Vorsehen mindestens einer flexiblen Folientaste in der Folienschicht (110) beinhaltet.

12. Automobilinnenraum, welcher eine Steuerungsanordnung (100) nach einem der Ansprüche 1 bis 5 aufweist.

## Revendications

1. Ensemble de contrôle (100) pour une portion de l'habitacle d'une automobile, comprenant :
une couche de film (110) présentant au moins une zone fonctionnelle (120),
un support (150) prévu derrière au moins une portion de la couche de film (110),
au moins un élément contrôlable (130) prévu derrière la couche de film (110) et apte à être engagé par un occupant du véhicule par interaction avec celle des zones fonctionnelles (120) qui y correspond dans la couche de film (110),
au moins un bord de la zone fonctionnelle (120) étant défini par une fente (124) ménagée dans la couche de film (110),
**caractérisé en ce que**
l'ensemble de contrôle (100) comprend en outre une nervure (162) prévue dans la fente (124) et débordant au-delà d'une surface extérieure de la couche de film (110).

2. Ensemble de contrôle (100) selon la revendication 1, comprenant en outre au moins une ouverture (152) ménagée dans le support (150) et essentiellement alignée sur celle des zones fonctionnelles (120) qui y correspond dans la couche de film (110).

3. Ensemble de contrôle (100) selon la revendication 1, dans lequel la portion de l'habitacle d'automobile est une console de toit (100).

4. Ensemble de contrôle (100) selon la revendication 1, dans lequel au moins un bord d'au moins une zone fonctionnelle (120) est défini par un creux de la couche de film (110).

5. Ensemble de contrôle (100) selon la revendication 1, dans lequel au moins une zone fonctionnelle (120) comprend au moins un dôme prévu dans la couche de film (110).

6. Procédé de fabrication d'un ensemble (100) de console de toit, le procédé comprenant les étapes qui consistent à :
former au moins une zone fonctionnelle (120) dans une couche de film (110) de la console de toit,
prévoir un support (150) derrière au moins une portion de la couche de film (110),
prévoir derrière la couche de film (110) au moins un élément contrôlable (130) apte à être engagé par un occupant du véhicule par interaction avec celle des zones fonctionnelles (120) qui y correspond dans la couche de film (110),
la formation d'au moins une zone fonctionnelle (120) dans la couche de film (110) comprenant la formation dans la couche de film (110) d'un canal suivant au moins un premier bord de la ou des zones fonctionnelles (120),
**caractérisé en ce que**
une nervure (162) qui déborde au-delà de la surface extérieure de la couche de film (110) est prévue dans la fente (124).

7. Procédé selon la revendication 6, comprenant en outre l'étape qui consiste à prévoir dans le support (150) au moins une ouverture (152) essentiellement alignée sur celle des zones fonctionnelles (120) qui y correspond dans la couche de film (110).

8. Procédé selon la revendication 6, comprenant en outre pour au moins une zone fonctionnelle (120) dotée d'une fente (124) l'étape qui consiste à prévoir une charnière le long d'au moins un deuxième bord de cette zone fonctionnelle (120).

9. Procédé selon la revendication 6, dans lequel l'étape consistant à prévoir une charnière comprend l'amincissement du matériau de la couche de film (110) et/ou du support (150) en correspondance à la ligne de charnière.

10. Procédé selon la revendication 6, dans lequel l'étape consistant à former au moins une zone fonctionnelle (120) comprend l'étape qui consiste à réaliser au moins un premier étirage dans la couche de film (110) sur au moins un premier bord de la ou des zones fonctionnelles (120).

11. Procédé selon la revendication 6, dans lequel l'étape consistant à former au moins une zone fonctionnelle (120) comprend l'étape qui consiste à réaliser au moins un dôme dans la couche de film (110).

12. Habitacle d'automobile comprenant un ensemble de contrôle (100) selon l'une des revendications 1 à 5.
